# EUROPEAN PATENT APPLICATION

(11) **EP 4 768 558 A1**
(43) Date of publication of application: **01.07.2026**
(21) Application number: 25208343.1
(22) Date of filing: 13.10.2025
(51) Int. Cl.: C10M 111/04

(54) **MOTOR AND GEARBOX FLUID FORMULATIONS AND USES THEREOF**

(30) Priority: 14.10.2024 US 202418914801
(71) Applicant: Tesla, Inc., Austin, TX 78725 (US)
(72) Inventor: ZHANG, Wenyang, Austin, Texas, 78725 (US); BELLEMARE, Eric, Austin, Texas, 78725 (US); LEE-MING, Cameron, Austin, Texas, 78725 (US); KACKLEY, Christian, Austin, Texas, 78725 (US); URBAN, Joshua, Austin, Texas, 78725 (US); VERZENI, Nicolas, Austin, Texas, 78725 (US)
(74) Representative: Liesegang, Eva

(57) **Abstract**

Fluid formulations, including low traction fluid, low viscosity motor fluid and high pressure viscosity coefficient fluid formulations, that may be used in vehicle drive trains are described herein. The fluid formulations include a base oil and an additive. The fluid formulations can increase efficiency, reduce friction, and extend drive cycles associated with vehicle drive units.

## Description

### BACKGROUND

### Field

The present invention relates to fluid formulations. More specifically, the present invention relates to high efficiency and low friction fluid formulations. Exemplary uses include gearboxes (gear, bearing, etc.), mechanical applications with metal to metal contact, and automotive applications (e.g., electric vehicle drive units and automotive drivelines).

### Description of the Related Art

Automotive technologies encompass a wide range of systems and components designed to enhance the performance, efficiency, and durability of vehicles. These technologies include the development of fluid formulations for electric vehicle drive units, which consist of electric motors and gearboxes. Components such as electric vehicle drive units may utilize certain fluids to reduce friction, manage heat, and ensure long-term reliability. Applications of these technologies extend to various types of vehicles, including passenger cars, trucks, and specialized electric vehicles such as robotaxis and semi-trucks.

However, existing fluid formulations may not balance gearbox requirements of gear and bearing protection, requirements of a continuous power motor, and efficiency requirements without sacrificing system efficiency and/or durability. As such, there currently is a need for fluid formulations that simultaneously provide or achieve high drive unit efficiency, extended fluid life, and motor cooling.

### SUMMARY

For purposes of summarizing the disclosure and the advantages achieved over the prior art, certain objects and advantages of the disclosure are described herein. Not all such objects or advantages may be achieved in any particular embodiment. Thus, for example, those skilled in the art will recognize that the invention may be embodied or carried out in a manner that achieves or optimizes one advantage or group of advantages as taught herein without necessarily achieving other objects or advantages as may be taught or suggested herein.

In some aspects, the techniques described herein relate to a fluid formulation, including: an additive; and a base oil, wherein the base oil is selected from the group consisting of an American Petroleum Institute (API) group II oil, an API group II+ oil, an API group III oil, an API group III+ oil, an API group IV oil, an API group V oil, and combinations thereof.

In some aspects, the techniques described herein relate to a fluid formulation, wherein the base oil is selected from the group consisting of a paraffin, a poly-alpha-olefin (PAO), a monoester, a di-ester, an alkylated naphthalene, a polyol ester, and combinations thereof.

In some aspects, the techniques described herein relate to a fluid formulation, wherein the paraffin is selected from the group consisting of an iso-paraffin, a straight chain paraffin, a cyclo paraffin, and combinations thereof.

In some aspects, the techniques described herein relate to a fluid formulation, wherein the poly-alpha-olefin is selected from the group consisting of dimer, trimer, and tetramer formed from C6, C8, C10, C12, C14, or C16 monomers through oligomerization assisted by Ziegler-Natta catalysts, Lewis acids, or combinations thereof, wherein the group does not include C10 trimer.

In some aspects, the techniques described herein relate to a fluid formulation, wherein the poly-alpha-olefin is selected from the group consisting of oligomerizations formed from C6, C8, C10, C12, C14, or C16 monomers using metallocene compound based catalysts, Ziegler-Natta catalysts, Lewis acids, or combinations thereof, and wherein a carbon number of one molecule of the oligomerizations is higher than 80 and less than 300.

In some aspects, the techniques described herein relate to a fluid formulation, wherein the monoester is composed of monobasic acids and alcohols in 1:1 ratio, and wherein the monobasic acids is selected from the group consisting of octanoic acid, iso-octanoic acid, nonanoic acid, iso-nonanoic acid, decanoic acid, iso- decanoic acid, dodecanoic acid, iso-dodecanoic acid, myristic acid, iso-myristic acid, palmitic acid, iso-palmitic acid, stearic acid, iso-stearic acid, oleic acid, and their isomers, and wherein the alcohols is selected from the group consisting of iso-octyl alcohol, 2-ethylhexyl alcohol, iso-nonyl alcohol, 2-propylheptyl alcohol, iso-decyl alcohol, iso-tridecyl alcohol, and their isomers.

In some aspects, the techniques described herein relate to a fluid formulation, wherein the di-ester is composed of diacids and alcohols in 1:2 ratio, and wherein diacids is selected from the group consisting of adipic acid, azelaic acid, sebacic acid, dodecanedioc acid, and their isomers, and wherein alcohols is selected from the group consisting of iso-octyl alcohol, 2-ethylhexyl alcohol, iso-nonyl alcohol, 2-propylheptyl alcohol, iso-decyl alcohol, iso-tridecyl alcohol, and their isomers.

In some aspects, the techniques described herein relate to a fluid formulation, wherein the polyol ester is composed of polyols and monobasic acids, wherein the polyols is selected from the group consisting of neopentyl glycol and pentaerythritol, and wherein monobasic acids is selected from the group consisting of pentanoic acid, iso-pentanoic acid, hexanoic acid, iso-hexanoic acid, heptanoic acid, iso-heptanoic acid, octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, and their isomers.

In some aspects, the techniques described herein relate to a fluid formulation, wherein the additive is selected from the group consisting of an anti-friction additive, an anti-wear additive, an extreme pressure additive, an anti-oxidant, a corrosion inhibitor, a yellow metal deactivator, a dispersant, a detergent, a defoamer, a seal swell agent, a solvency booster, a dye, and combinations thereof.

In some aspects, the techniques described herein relate to a fluid formulation, wherein the fluid formulation includes 0 to 15 wt.% of the additives, and wherein the additives is selected from the group consisting of HiTEC 3491K, HiTEC 5769, HiTEC 35750, HiTEC 2571, HiTEC 4780, other equivalent additives, and combinations thereof.

In some aspects, the techniques described herein relate to a fluid formulation, further including a viscosity index improver.

In some aspects, the techniques described herein relate to a fluid formulation, wherein the fluid formulation includes 0-6 wt.% of the viscosity index improver.

In some aspects, the techniques described herein relate to a fluid formulation, wherein the viscosity index improver includes a viscosity of 100-2000 cSt at 100 °C.

In some aspects, the techniques described herein relate to a fluid formulation, further including a high viscosity base oil.

In some aspects, the techniques described herein relate to a fluid formulation, wherein the fluid formulation includes 0-40 wt.% of the high viscosity base oil, and wherein the high viscosity base oil is selected from a group consisting of oligomers of C6, C8, C10, C12, C14, and C16 monomers, and/or complex esters.

In some aspects, the techniques described herein relate to a fluid formulation, wherein the high viscosity base oil includes a viscosity of 40-1200 cSt at 100 °C.

In some aspects, the techniques described herein relate to a fluid formulation, wherein the fluid formulation includes Sulfur content by mass between 0 to 2000 ppm, Phosphorous content by mass between 0 to 300 ppm, Calcium content by mass between 0 to 150 ppm, Boron content by mass between 0-100 ppm, Silicon content by mass between 0 to 20 ppm, and Nitrogen content by mass between 0-1200 ppm.

In some aspects, the techniques described herein relate to a vehicle drive unit, including: a motor; a motor fluid system in fluid communication with the motor; a gearbox; a gearbox fluid system in fluid communication with the gearbox, wherein the gearbox fluid system includes the fluid formulation.

In some aspects, the techniques described herein relate to a vehicle drive unit, wherein the gearbox fluid system is configured to pump fluid at a rate of 1-20 LPM through a mechanical or an electric oil pump.

In some aspects, the techniques described herein relate to a vehicle drive unit, wherein the motor fluid system is in fluid communication with the gearbox fluid system.

In some aspects, the techniques described herein relate to a vehicle drive unit, wherein the motor fluid system includes a low viscosity motor fluid.

In some aspects, the techniques described herein relate to a vehicle drive unit, wherein the motor fluid system includes the fluid formulation.

In some aspects, the techniques described herein relate to a drive unit, wherein the motor is an electric motor.

In some aspects, the techniques described herein relate to a vehicle including the vehicle drive unit.

In some aspects, the techniques described herein relate to a vehicle, further including a secondary vehicle drive unit that includes a secondary high pressure viscosity coefficient fluid.

All of these embodiments are intended to be within the scope of the invention herein disclosed. These and other embodiments will become readily apparent to those skilled in the art from the following detailed description of the preferred embodiments having reference to the attached figures, the invention not being limited to any particular preferred embodiment(s) disclosed.

### BRIEF DESCRIPTION OF THE DRAWINGS

FIG. 1A shows a schematic depiction of a dual fluid path system design according to some embodiments of the present disclosure.
FIG. 1B shows a schematic depiction of a single fluid path system design according to some embodiments of the present disclosure.
FIG. 2A shows a fluid friction comparison between various fluid formulations and a baseline fluid formulation according to some embodiments of the present disclosure.
FIG. 2B illustrates the drive unit efficiency percentage for a fluid formulation under various motor operating conditions according to some embodiments of the present disclosure.
FIG. 2C illustrates the drive unit efficiency percentage for a fluid formulation under various motor operating conditions based on dynamometer testing data according to some embodiments of the present disclosure.
FIG. 3A is a graph illustrating the drive unit efficiency for a fluid formulation under various motor operating conditions according to some embodiments of the present disclosure.
FIG. 3B is a graph illustrating the drive unit efficiency for a fluid formulation under various motor operating conditions according to some embodiments of the present disclosure.
FIG. 4 shows a fluid friction comparison among various fluid formulations under various entrainment speeds according to some embodiments of the present disclosure.
FIGS. 5A, 5B, 5C, and 5D illustrate differences in normalized gearbox efficiency between various fluid formulations according to some embodiments of the present disclosure.
FIGS. 6A, 6B, 6C, and 6D illustrate normalized output mesh Lambda ratio for various fluid formulations according to some embodiments of the present disclosure.

### DETAILED DESCRIPTION

The present disclosure may be understood by reference to the following detailed description. It is noted that, for purposes of illustrative clarity, certain elements in various drawings may not be drawn to scale, may be represented schematically or conceptually, or otherwise may not correspond exactly to certain physical configurations of embodiments.

Generally described, one or more aspects of the present disclosure relate to fluid formulations for vehicles (e.g., electric vehicles), or more specifically, vehicle drive units (e.g., electric motor, gearbox, and drive inverter). In some embodiments, the fluid formulation is a low friction and low traction fluid achieved through molecular structure design, viscosity control, tighter molecule weight distribution, and/or fluid formulation control. For example, low fluid friction and traction are achieved through low traction molecule design coupled with higher viscosity secondary molecules with polarity specifically designed for boundary and mixed lubrication regime friction reduction (flattening Stribeck curve).

Advantageously, the fluid formulations of the present disclosure may provide higher drive unit efficiencies and lower friction (e.g., about 15% to 30% reduction for gearbox loss in certain embodiments), through the entire drive cycle. As such, the fluid formulations may extend vehicle range. Friction reduction can be advantageously achieved through molecular design and improved viscometrics to balance parasitic loss and torque dependent loss, thereby achieving higher lubricity levels. Improvements in fluid viscosity enable drive units to meet gear train protection and motor cooling requirements while working under improved or maximized drive unit efficiency. Additionally, the fluid drain interval may be extended through fluid life extension, which can be beneficial to meet various requirements (e.g., environment, mileage, energy consumption) associated with various types of vehicles (e.g., semi-trucks, robotaxis, light duty passenger vehicles, light duty trucks, or the like).

In the realm of drive units, achieving higher efficiency and extending drive range remain a daunting challenge. For example, although some fluid formulations for electric vehicle drive units may be utilized to reduce friction and traction, state-of-the-art low traction gear oil products often suffer from issues such as low-pressure viscosity coefficient, hygroscopic properties, hydrolytic stability, and compatibility problems. These issues may render the fluid formulation unsuitable for electric vehicle drive unit lubrication and cooling applications. Additionally, it may be difficult to balance the need for gear and bearing protection while satisfying stringent requirements for motor cooling and drive unit efficiency.

To address many of the above challenges, some embodiments of the present disclosure disclose fluid formulations, such as low traction fluid, low viscosity motor fluid, and/or high pressure viscosity coefficient fluid formulations, for vehicle drive units. In some embodiments, the fluid formulations comprise a base oil selected from API group II, II+, III, III+, IV, V oils, and combinations thereof, and an additive. The base oils may include paraffins, poly-alpha-olefins, monoesters, diesters, alkylated naphthalenes, and polyol esters. Advantageously, in certain embodiments, the formulations may leverage Ziegler-Natta catalysts, Lewis acids, and/or higher degree of oligomerizations to produce molecules with specific molecular weights and structures. The formulations can be used in electric vehicle drive units to enhance drive unit efficiency and provide robust lubrication under high load conditions. The electric vehicle drive units may include a motor, a gearbox, and a drive inverter, with a fluid system in flow communication with the motor and the gearbox.

In some embodiments, the disclosed fluid formulations can include a primary base oil and a secondary base oil. The primary base oil may constitute the majority of the fluid formulations (e.g., around 50-85% by weight), and may exhibit lubricating properties beneficial for the drive unit. The primary base oil can be selected from a range of base oils, including paraffins, poly-alpha-olefins (PAOs), monoesters, diesters, alkylated naphthalenes, and polyol esters in view of their lubricating properties, thermal stability, and/or other properties. The molecules associated with the primary base oil may be designed to achieve low friction and traction as well as controlled viscosity to ensure adequate lubrication across a wide range of operating temperatures and conditions. The primary base oil may be formulated to be compatible with various additives that enhance its performance, such as anti-wear agents, antioxidants, and friction modifiers.

In some embodiments, the secondary base oil is a lower percentage by weight as compared to the primary base oil. The secondary base oil may serve to enhance specific performance characteristics of the fluid formulation. For example, the secondary base oil may have a higher viscosity compared to the primary base oil. As such, the secondary base oil may provide robust lubrication under high load conditions, thereby ensuring the durability and longevity of the drive unit components. Example secondary base oils can include higher viscosity group IV PAOs, group V chemicals, and group V complex esters developed from polyols and acids, including diacids. The higher viscosity group V complex esters may provide superior lubricating properties and thermal stability, making them suitable for demanding applications.

In some embodiments, one or more additive may be included in a fluid formulation that includes a base oil. The additives can be selected from the group consisting of various functional additives, such as anti-friction additive (e.g., for reducing friction between moving parts), anti-wear additive (e.g., for providing a protective layer on surfaces to minimize wear and extend the life of components), extreme pressure additive (e.g. for enhancing the fluid formulation's ability to withstand high pressure conditions, preventing metal-to-metal contact and reducing the risk of scuffing and pitting), anti-oxidant (e.g., for preventing oxidation of the fluid formulation, thereby extending its life and maintaining its performance characteristics over time), corrosion inhibitor (e.g., for protecting metal surfaces from corrosion, ensuring the longevity and reliability of the drive unit components), and/or dye (e.g., for adding color to the fluid formulation for identification and leak detection purposes).

In some embodiments, the fluid formulation may comprise about 0 to 15 wt.% (e.g., 0 - 15% by weight) of the additives, thereby allowing for flexibility in tailoring the fluid formulation to meet specific performance requirements. Example additives that can be used in the fluid formulation may include HiTEC 3491K, HiTEC 5769, HiTEC 35750, HiTEC 2571, HiTEC 4780, other equivalent additives, and combinations thereof.

### Base Oil

In some embodiments, the fluid formulations (e.g., low traction fluid and/or high viscosity coefficient fluid) may include at least one base oil and an additive. In some embodiments, the base oil is selected from the group consisting of: an American Petroleum Institute (API) group II ("GII") oil, an API group II+ ("GII+") oil, an API group III ("GIII") oil, an API group III+ ("GIII+") oil, an API group IV ("GIV") oil, an API group V ("GV") oil, and combinations thereof. In some embodiments, the base oil is selected from the group consisting of a paraffin, a poly-alpha-olefin (PAO), a monoester, a di-ester, an alkylated naphthalene, a polyol ester, and combinations thereof. In some embodiments, the paraffin may be selected from the group consisting of an iso-paraffin, a straight chain paraffin, a cyclo paraffin, and combinations thereof in any ratio.

In some embodiments, the poly-alpha-olefin (PAO) is selected from the group consisting of dimer, trimer, and tetramer formed from C6, C8, C10, C12, C14, or C16 monomers through oligomerization assisted by Ziegler-Natta catalysts, Lewis acids, or combinations thereof. The group may not consist of or include C10 trimer. Ziegler-Natta catalysts may be a class of catalysts used in the polymerization of olefins to produce polymers with specific molecular weights and structures. In the context of PAOs, Ziegler-Natta catalysts may advantageously help control the degree of oligomerization and the resulting molecular structure. Lewis acids may be chemical compounds that can accept an electron pair. In the oligomerization process, Lewis acids may act as co-catalysts, enhancing the activity of other catalyst and improving the efficiency of the reaction.

In some embodiments, the poly-alpha-olefin (PAO) is selected from the group consisting of oligomerizations formed from C6, C8, C10, C12, C14, or C16 monomers using metallocene compound based catalysts, Ziegler-Natta catalysts, Lewis acids, or combinations thereof. A carbon number of one molecule of the oligomerizations can be higher than 80 and less than 300. The higher degree of oligomerization (e.g., carbon number between 80 and 300) may result in larger, more complex molecules with enhanced lubricating properties and thermal stability. Metallocene compound based catalysts may be a type of catalyst that includes a metal center bonded to organic ligands for producing polymers with precise control over molecular weight distribution and structure. In the context of PAOs, metallocene compound based catalysts may enable the synthesis of high molecular weight oligomers with specific friction, viscosity, and/or thermal properties.

In some embodiments, the monoester may be composed of monobasic acids and alcohols in 1:1 ratio. The monobasic acids may be selected from the group consisting of octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, and isomers of octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, and oleic acid. The alcohols may be selected from the group consisting of iso-octyl alcohol, 2-ethylhexyl alcohol, iso-nonyl alcohol, 2-propylheptyl alcohol, iso-decyl alcohol, iso-tridecyl alcohol, and isomers of iso-octyl alcohol, 2-ethylhexyl alcohol, iso-nonyl alcohol, 2-propylheptyl alcohol, iso-decyl alcohol, and iso-tridecyl alcohol.

In some embodiments, the di-ester may be composed of diacids and alcohols in 1:2 ratio. The diacids may be selected from the group consisting of adipic acid, azelaic acid, sebacic acid, dodecanedioc acid, and isomers of adipic acid, azelaic acid, sebacic acid, and dodecanedioc acid. The alcohols may be selected from the group consisting of iso-octyl alcohol, 2-ethylhexyl alcohol, iso-nonyl alcohol, 2-propylheptyl alcohol, iso-decyl alcohol, iso-tridecyl alcohol, and isomers of iso-octyl alcohol, 2-ethylhexyl alcohol, iso-nonyl alcohol, 2-propylheptyl alcohol, iso-decyl alcohol, and iso-tridecyl alcohol.

In some embodiments, the polyol ester may be composed of polyols and monobasic acids. The polyols may be selected from the group consisting of neopentyl glycol and pentaerythritol. The monobasic acids may be selected from the group consisting of pentanoic acid, iso-pentanoic acid, hexanoic acid, iso-hexanoic acid, heptanoic acid, iso-heptanoic acid, octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, and isomers of pentanoic acid, iso-pentanoic acid, hexanoic acid, iso-hexanoic acid, heptanoic acid, iso-heptanoic acid, octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, and oleic acid.

In some embodiments, the additive is selected from the group consisting of an anti-friction additive, an anti-wear additive, an extreme pressure additive, an anti-oxidant, a corrosion inhibitor, a yellow metal deactivator, a dispersant, a detergent, a defoamer, a seal swell agent, a solvency booster, a dye, and combinations thereof.

In some embodiments, the fluid formulations may include a primary base oil and a secondary base oil. Compared with the secondary base oil, the primary base oil may correspond to a higher weight percentage (e.g., 70%) of the fluid formulations. In some embodiments, the primary base oil may be a low traction and/or a low friction fluid and the secondary base oil may be a high viscosity coefficient fluid. Example base oils (e.g., primary base oils) along with corresponding properties and performance metrics are shown in Table A below.

**Table A: Example Base Oils**

| **Properties** | **Base Oil #1** | **Base Oil #2** | **Base Oil #3** | **Base Oil #4** | **Base Oil #5** | **Base Oil #6** |
|---|---|---|---|---|---|---|
| KV100, cSt, ASTM D445 | 1.6 to 2 | 2 to 2.6 | 3.0 to 3.4 | 3.4 to 4.2 | 3.7 to 5.3 | 5 to 5.6 |
| KV40, cSt, ASTM D445 | 4.8 to 5.6 | 6.6 to 8.8 | 9.0 to 13.6 | 13.6 to 20.0 | 13.0 to 18.0 | 16.6 to 20.4 |
| VI, ASTM D2270 | 90 min. | 90 mins. | 120 min. | 130 min. | 120 min. | 120 min. |
| Pour Point, C, ASTM D97 | -30 C max. | -30 C max. | -30 C max. | 10 C max. | -36 C max. | -36 C max. |
| Flash Point, C, ASTM D92 | 160 min. | 180 min. | 180 min. | 200 min. | 180 min. | 180 min. |
| Brookfield Viscosity at -20 C, cP, ASTM D2983 | 600 max. | 600 max. | 600 max. | - | 600 max. | 600 max. |
| Novack Volatility at 180 C for 2 hrs, % wt., ASTM D5800 | 20% max. | 10% max. | 6% max. | 6% max. | 6% max. | 6% max. |
| Acid Value, mg KOH/g, ASTM D974 | <0.03 | <0.03 | <0.03 | <0.03 | <0.03 | <0.03 |
| Hydroxyl Value, mg KOH/g, ISO 4326 | <1 | <1 | <1 | <1 | <1 | <1 |
| Iodine Value, mg l/100g, ISO 3961 | <1 | <1 | <1 | <1 | <1 | <1 |
| Appearance | Clear and no haze | Clear and no haze | Clear and no haze | Clear and no haze | Clear and no haze | Clear and no haze |
| Color Value APHA, ISO 6271 | <100 | <100 | <100 | <100 | <100 | <100 |
| Water Content, ppm, ASTM D6304 | <600 | <600 | <600 | <600 | <600 | <600 |
| Biobase and/or Renewable Content, % wt., ASTM D6666 | Report | Report | Report | Report | Report | Report |
| DKA Oxidation, CEC L-48-00, 170 C, 168 hrs, ΔKV 40/ΔKV 100/ΔTAN/Slud ge Rating | 15% max./15% max./3 max./no sludge | 15% max./15% max./3 max./no sludge | 15% max./15% max./3 max./no sludge | 15% max./15% max./3 max./no sludge | 15% max./15% max./3 max./no sludge | 15% max./15% max./3 max./no sludge |
| Elastomer Compatibility, HNBR, 125 C, 1000 hrs, ΔVolume/ΔHard ness/ΔElongatio n/ΔTesnsile Strength | 25% max./10 max./60% max./60% max. | 25% max./10 max./60% max./60% max. | 25% max./10 max./60% max./60% max. | 25% max./10 max./60% max./60% max. | 25% max./10 max./60% max./60% max. | 25% max./10 max./60% max./60% max. |
| Elastomer Compatibility, FKM, 150 C, 1000 hrs, ΔVolume/ΔHard ness/ΔElongatio n/ΔTesnsile Strength | 10% max./10 max./60% max./60% max. | 10% max./10 max./60% max./60% max. | 10% max./10 max./60% max./60% max. | 10% max./10 max./60% max./60% max. | 10% max./10 max./60% max./60% max. | 10% max./10 max./60% max./60% max. |
| Hydrolytic Stability, 10% water, 90 C, 192 hours, ΔKV 40/ΔKV 100/Copper Rating/ΔTAN | 15% max./15% max./4A or better/3 max. | 15% max./15% max./4A or better/3 max. | 15% max./15% max./4A or better/3 max. | 15% max./15% max./4A or better/3 max. | 15% max./15% max./4A or better/3 max. | 15% max./15% max./4A or better/3 max. |
| Scuffing Validation, modified CEC L-84-02 | NA | NA | NA | NA | NA | NA |
| Pitting Wear Validation, modified CEC L-108-19 | NA | NA | NA | NA | NA | NA |
| Coefficient of friction | <0.01 | <0.01 | <0.01 | <0.01 | <0.01 | <0.01 |

Table A shows properties associated with six example base oils. For example, the row "KV100, cSt, ASTM D445" represents kinematic viscosity at 100°C and measures the fluid's resistance to flow at 100 degrees Celsius, indicating its thickness and flow characteristics at this temperature. In certain embodiments, the corresponding values range from 1.6 to 5.6 centistokes (cSt) across the example base oils.

In some embodiments, the row "KV40, cSt, ASTM D445" represents kinematic viscosity at 40°C, measured in centistokes (cSt). This property indicates the fluid's resistance to flow at 40 degrees Celsius, providing insight into its performance at higher temperatures. In certain embodiments, the values range from 4.8 to 20.4 cSt.

In some embodiments, the row "VI, ASTM D2270" represents viscosity index, which indicates the change in viscosity with temperature. Higher values represent more stable viscosity across a range of temperatures. In certain embodiments, the minimum value starts at 90 for all formulations.

In some embodiments, the row "Pour Point, C, ASTM D97" represents the lowest temperature at which the fluid remains pourable, indicating its low-temperature performance. In certain embodiments, the maximum values range from -36°C to 10°C.

In some embodiments, the row "Flash Point, C, ASTM D92" represents temperature at which the fluid can vaporize to form an ignitable mixture in air, indicating its safety and volatility characteristics. In certain embodiments, the minimum value starts at 160°C for all formulations.

In some embodiments, the row "Brookfield Viscosity at -20 C, cP, ASTM D2983" measures the fluid's viscosity at -20 degrees Celsius, indicating its performance in cold conditions. In certain embodiments, the maximum value is 600 cP for most formulations.

In some embodiments, the row "Novack Volatility at 180 C for 2 hrs, % wt., ASTM D5800" measures the fluid's tendency to evaporate at high temperatures, indicating its stability and longevity. In certain embodiments, the maximum value starts at 6% for all formulations.

In some embodiments, the row "Acid Value, mg KOH/g, ASTM D974" measures the amount of acidic components in the fluid, indicating its potential for causing corrosion. In certain embodiments, the maximum value is less than 0.03 mg KOH/g for all formulations.

In some embodiments, the row "Hydroxyl Value, mg KOH/g, ISO 4326" measures the amount of hydroxyl groups in the fluid, indicating its potential for hydrolytic stability. In certain embodiments, the maximum value is less than 1 mg KOH/g for all formulations.

In some embodiments, the base oils of the disclosed fluid formulations may include poly-alpha-olefin (PAO), paraffin, monoester, diester, and/or polyol ester. PAOs are synthetic hydrocarbons formed through the oligomerization of alpha-olefins. Example PAOs in the fluid formulation may include dimers, trimers, and tetramers that are formed from C6, C8, C10, C12, C14, and C16 monomers, but may not include C10 trimer. These oligomers may be synthesized using Ziegler-Natta catalysts and Lewis acids, and combinations thereof in any ratio. Example PAOs may exhibit superior lubricating properties, high viscosity index, and thermal stability.

In some embodiments, paraffin may include normal paraffin, iso paraffin, and cycloparaffin. Normal paraffin, iso paraffin, and cycloparaffin may be different types of hydrocarbons used in the base oils. Normal paraffins are straight-chain hydrocarbons, iso paraffins are branched-chain hydrocarbons, and cycloparaffins are ring-structured hydrocarbons. Each type of paraffin may offer differing properties that contribute to the overall performance of the lubricant.

In some embodiments, monoesters are composed of monobasic acids and alcohols. The monobasic acids can be selected from a variety of options, including octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, and their isomers. The alcohols can be selected from iso-octyl alcohol, 2-ethylhexyl alcohol, iso-nonyl alcohol, 2-propylheptyl alcohol, iso-decyl alcohol, iso-tridecyl alcohol, and their isomers. Monoesters may enhance lubricity and thermal stability of base oils.

In some embodiments, diesters are composed of diacids and alcohols. The diacids can be selected from adipic acid, azelaic acid, sebacic acid, dodecanedioic acid, their isomers, and more. The alcohols can be selected from iso-octyl alcohol, 2-ethylhexyl alcohol, iso-nonyl alcohol, 2-propylheptyl alcohol, iso-decyl alcohol, iso-tridecyl alcohol, and their isomers. Diesters provide additional protection against wear and extreme pressure conditions.

In some embodiments, polyol esters are composed of polyols and acids. The monobasic acids can be selected from pentanoic acid, iso-pentanoic acid, hexanoic acid, iso-hexanoic acid, heptanoic acid, iso-heptanoic acid, octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, and their isomers. The polyols can be selected from neopentyl glycol, pentaerythritol, and more. Polyol esters offer superior lubricating properties and thermal stability. Example molecular structures of base oils (e.g., primary base oils) are shown in Table B below.

**Table B: Example Molecular Structures of Base Oils**

| **Name** | **Structure** |
|---|---|
| Examples of dimer, trimer, tetramer, or other oligomers from higher degrees of polymerization formed from C6, C8, C10, C12, C14, C16 monomers (except C10 trimer) | 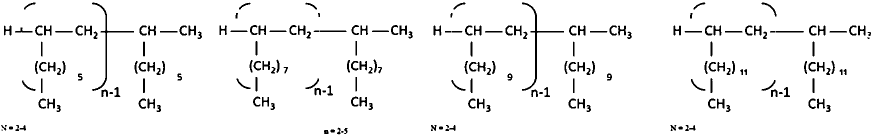 |
| Examples of normal paraffin, iso paraffin, cycloparaffin | 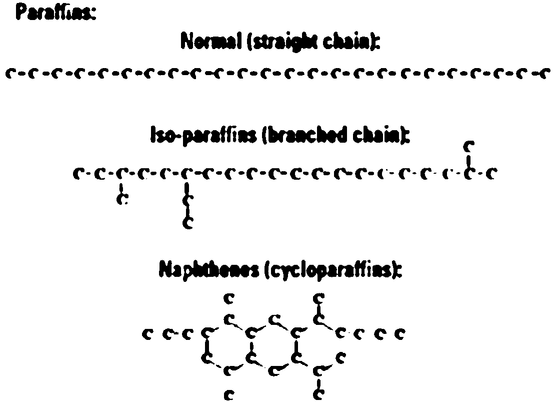 |
| Examples of monoesters composed of monobasic acids and alcohols. Monobasic acids can be selected from octanoic acid, iso- | 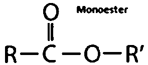 |
| octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, their isomers, and more. Alcohols can be selected from iso-octyl alcohol, 2-ethylhexyl alcohol, iso-nonyl alcohol, 2-propylheptyl alcohol, iso-decyl alcohol, iso-tridecyl alcohol, their isomers, and more | |
| Examples of diesters composed of diacids and alcohols. Diacids can be selected from adipic acid, azelaic acid, sebacic acid, dodecanedioc acid, their isomers, and more. Alcohols can be selected from iso-octyl alcohol, 2-ethylhexyl alcohol, iso-nonyl alcohol, 2-propylheptyl alcohol, iso-decyl alcohol, iso-tridecyl alcohol, their isomers, and more | 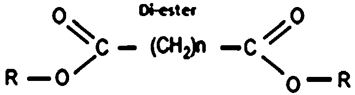 |
| Examples of polyol esters composed of polyols and acids. Monobasic acids can be selected from pentanoic acid, iso-pentanoic acid, hexanoic acid, iso-hexanoic acid, heptanoic acid, iso-heptanoic acid, octanoic acid, iso-octanoic acid, nonanoic acid, iso-nonanoic acid, | 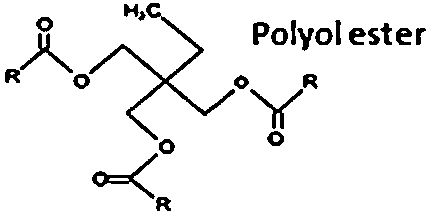 |
| decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, their isomers, and more. Polyols can be selected from neopentyl glycol, pentaerythritol, and more | |

In some embodiments, the fluid formulation may include high viscosity base oils (e.g., secondary base oil) used in the fluid formulations for electric vehicle drive units. The high viscosity base oils may provide robust lubrication under high load conditions, ensuring the durability and longevity of the drive unit components. Example high viscosity base oils are shown in Table C below.

**Table C: Example High Viscosity Base Oils**

| **Name** | **Structure** |
|---|---|
| Monomers of C6, C8, C10, C12, C14, C16 were used to synthesize oligomers higher viscosity base oil. Oligomers can contain isomers and can be synthesized from Ziegler-Natta and/or Metallocene catalysts assisted processes. | 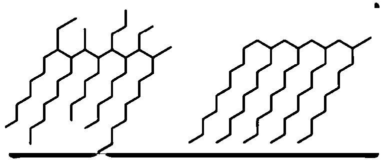 |
| Higher viscosity group V complex esters are developed from polyols, acids, diacids. | 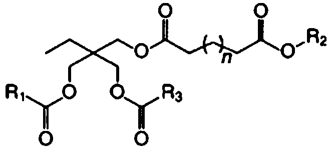 |

As shown in Table C, in some embodiments, high viscosity base oils may be synthesized from monomers of C6, C8, C10, C12, C14, and C16. These monomers undergo polymerization to form oligomers with higher viscosity, which are essential for maintaining adequate lubrication in demanding applications. The carbon number of one molecule in these oligomers is higher than 80 and less than 300. As noted above, the oligomers can contain isomers and are synthesized using advanced catalytic processes, such as Ziegler-Natta catalysts and/or metallocene compound-based catalysts, and Lewis acids. These advanced catalytic processes enable precise control over the molecular structure and properties of the base oils, resulting in high-performance lubricants. In some embodiments, high viscosity base oils may include esters (e.g., higher viscosity group V complex esters) that are developed from polyols and acids, including diacids. The higher viscosity group V complex esters may be synthesized to provide at least superior lubricating properties and thermal stability

### Finished Lubricant Formulations

In some embodiments, finished lubricant formulations may be made based on various base oils discussed above. By combining various base oils, additives, and/or other components, the formulations may achieve specific performance characteristics. Example finished lubricant formulations along with corresponding performance characteristics or metrics are shown in Table D below.

**Table D: Example Finished Lubricant Formulations (wt. %)**

| **Properties** | **Finished Lubricant Formulation #1** | **Finished Lubricant Formulation #2** | **Finished Lubricant Formulation #3** | **Finished Lubricant Formulation #4** | **Finished Lubricant Formulation #5** | **Finished Lubricant Formulation #6** |
|---|---|---|---|---|---|---|
| Base Oil #1, % wt. | 0-20% | 0-20% | 0-20% | 0-20% | 0-98% | 0-20% |
| Base Oil #2, % wt. | 0-98% | 0-20% | 0-20% | 0-20% | 0-20% | 0-20% |
| Base Oil #3, % wt. | 0-20% | 0-98% | 0-20% | 0-20% | 0-20% | 0-20% |
| Base Oil #4, % wt. | 0-20% | 0-20% | 0-20% | 0-98% | 0-20% | 0-20% |
| Base Oil #5, % wt. | 0-20% | 0-20% | 0-98% | 0-20% | 0-98% | 0-20% |
| Base Oil #6, % wt. | 0-20% | 0-20% | 0-20% | 0-20% | 0-20% | 0-98% |
| HITEC 3491K additives, % wt. | 0-12% | 0-12% | 0-12% | 0-12% | 0-12% | 0-12% |
| HITEC 35750 additives, % wt. | 0-12% | 0-12% | 0-12% | 0-12% | 0-12% | 0-12% |
| Other additives, % | 0-12% | 0-12% | 0-12% | 0-12% | 0-12% | 0-12% |

| wt. | | | | | | |
|---|---|---|---|---|---|---|
| High Viscosity Base Oil #1, % wt. | 0-40% | 0-40% | 0-40% | 0-40% | 0-40% | 0-40% |
| High Viscosity Base Oil #2, % wt. | 0-20% | 0-20% | 0-20% | 0-20% | 0-20% | 0-20% |
| High Viscosity Group V Base Oil, % wt. | 0-40% | 0-40% | 0-40% | 0-40% | 0-40% | 0-40% |
| VII, % wt. | 0-6% | 0-6% | 0-6% | 0-6% | 0-6% | 0-6% |
| Defoamers, % wt. | 0-0.1% | 0-0.1% | 0-0.1% | 0-0.1% | 0-0.1% | 0-0.1% |
| KV40, cSt, ASTM D445 | 16.0 to 32.0 | 16.0 to 32.0 | 16.0 to 32.0 | 16.0 to 32.0 | 46.0 to 100.0 | 46.0 to 100.0 |
| KV100, cSt, ASTM D445 | 4.0 to 7.5 | 4.0 to 7.5 | 4.0 to 7.5 | 4.0 to 7.5 | 8.0 to 16.0 | 8.0 to 16.0 |
| VI, ASTM D2270 | 120 min. | 120 min. | 120 min. | 120 min. | 120 min. | 120 min. |
| Pour Point, C, ASTM D97 | -30 C max. | -30 C max. | -30 C max. | -10 C max. | -30 C max. | -30 C max. |
| Flash Point, C, ASTM D92 | 180 min. | 180 min. | 180 min. | 180 min. | 180 min. | 180 min. |
| Brookfield Viscosity at -20 C, cP, ASTM D2983 | 800 max. | 800 max. | 800 max. | 2000 max. | 2000 max. | 2000 max. |
| Novack Volatility at 180 C for 2 hrs, % wt., ASTM D5800 | 20% max. | 10% max. | 6% max. | 6% max. | 6% max. | 6% max. |
| Appearance | Clear and no haze | Clear and no haze | Clear and no haze | Clear and no haze | Clear and no haze | Clear and no haze |
| Water Content, ppm, ASTM D6304 | <1000 | <1000 | <1000 | <1000 | <1000 | <1000 |
| Biobase and/or Renewable Content, % wt., ASTM D6666 | Report | Report | Report | Report | Report | Report |
| DKA Oxidation, CEC L-48-00, 170 C, 168 hrs, ΔKV 40/ΔKV 100/ΔTAN/Sludge Rating | 15% max./15% max./3 max./no sludge | 15% max./15% max./3 max./no sludge | 15% max./15% max./3 max./no sludge | 15% max./15% max./3 max./no sludge | 15% max./15% max./3 max./no sludge | 15% max./15% max./3 max./no sludge |
| Elastomer Compatibility, HNBR, 125 C, 1000 hrs, ΔVolume/ΔHardness /ΔElongation/ΔTesns ile Strength | 25% max./10 max./60% max./60% max. | 25% max./10 max./60% max./60% max. | 25% max./10 max./60% max./60% max. | 25% max./10 max./60% max./60% max. | 25% max./10 max./60% max./60% max. | 25% max./10 max./60% max./60% max. |
| Elastomer Compatibility, FKM, 150 C, 1000 hrs, ΔVolume/ΔHardness | 10% max./10 max./60% max./60% max. | 10% max./10 max./60% max./60% max. | 10% max./10 max./60% max./60% max. | 10% max./10 max./60% max./60% max. | 10% max./10 max./60% max./60% max. | 10% max./10 max./60% max./60% max. |
| /ΔElongation/ΔTesns ile Strength | | | | | | |
| Hydrolytic Stability, 10% water, 90 C, 192 hours, ΔKV 40/ΔKV 100/Copper Rating/ΔTAN | 15% max./15% max./4A or better/3 max. | 15% max./15% max./4A or better/3 max. | 15% max./15% max./4A or better/3 max. | 15% max./15% max./4A or better/3 max. | 15% max./15% max./4A or better/3 max. | 15% max./15% max./4A or better/3 max. |
| Scuffing Validation, modified CEC L-84-02 | No scuffing | No scuffing | No scuffing | No scuffing | No scuffing | No scuffing |
| Pitting Wear Validation, modified CEC L-108-19 | 90 hrs min. | 90 hrs min. | 90 hrs min. | 90 hrs min. | 120 hrs min. | 120 hrs min. |
| Coefficient of friction | <=0.01 | <=0.01 | <=0.01 | <=0.01 | <=0.012 | <=0.012 |

Table D lists six example finished lubricant formulations. Each of the example finished lubricant formulations may be characterized by specific attributes and components. As shown in Table D, each formulation may include different percentages of base oils #1 to #6. In certain embodiments, the percentages of base oils in the formulations range from 0% to 98% by weight.

In some embodiments, the formulations include various additives such as HITEC 3491K, HITEC 35750, and other additives. These additives enhance the lubricant's protective properties, including anti-wear, anti-oxidant, friction-modifying, and corrosion-inhibiting capabilities. In certain embodiments, the percentages of additives in the formulations range from 0% to 12% by weight.

In some embodiments, the formulations may include high viscosity base oils synthesized from oligomers of C6, C8, C10, C12, C14, and C16 monomers. These high viscosity base oils provide robust lubrication under high load conditions. In certain embodiments, the percentages of high viscosity base oils in the formulations range from 0% to 40% by weight.

In some embodiments, the formulations may include viscosity index improvers (VII), which help maintain optimal viscosity across different operating temperatures. In certain embodiments, the percentages of viscosity index improvers in the formulations range from 0% to 6% by weight.

In some embodiments, the formulations may include defoamers, which help reduce foam formation and ensure consistent lubrication performance. In certain embodiments, the percentages of defoamers in the formulations range from 0% to 0.1% by weight.

In some embodiments, some properties of the example finished lubricant formulations may include kinematic viscosity at 40°C (represented by the row "KV40, cSt, ASTM D445"), kinematic viscosity at 100°C (represented by the row "KV100, cSt, ASTM D445"), viscosity index (represented by the row "VI, ASTM D2270"), pour point, flash point, Brookfield Viscosity at -20°C, Novack Volatility at 180°C for 2 hours, appearance, water content, elastomer compatibility, hydrolytic stability, scuffing and pitting wear validation, and coefficient of friction.

In some embodiments, kinematic viscosity at 40°C measures the fluid's resistance to flow at 40 degrees Celsius, indicating its thickness and flow characteristics at this temperature. In certain embodiments, the values range from 16.0 to 100.0 cSt.

In some embodiments, kinematic viscosity at 100°C measures the fluid's resistance to flow at 100 degrees Celsius, providing insights into its performance at higher temperatures. In certain embodiments, the values range from 4.0 to 16.0 cSt.

In some embodiments, the viscosity index indicates the change in viscosity with temperature, with higher values representing more stable viscosity across a range of temperatures. In certain embodiments, the minimum value is 120 for all formulations.

In some embodiments, pour point is the lowest temperature at which the fluid remains pourable, indicating its low-temperature performance. In certain embodiments, the values range from -30°C to -10°C.

In some embodiments, flash point is the temperature at which the fluid can vaporize to form an ignitable mixture in air, indicating its safety and volatility characteristics. In certain embodiments, the minimum value is 180°C for all formulations.

In some embodiments, Brookfield Viscosity at -20°C measures the fluid's viscosity at -20 degrees Celsius, indicating its performance in cold conditions. In certain embodiments, the maximum value is 2000 cP.

In some embodiments, Novack Volatility at 180°C for 2 hours measures the fluid's tendency to evaporate at high temperatures, indicating its stability and longevity. In certain embodiments, the maximum value is 20% for all formulations.

In some embodiments, appearance describes the visual clarity and absence of haze in the fluid. As such, example formulations may be clear and free of haze in appearance.

In some embodiments, water content measures the amount of water in the fluid, indicating its potential for hydrolytic stability. In certain embodiments, the maximum value is 1000 ppm for all example formulations.

In some embodiments, elastomer compatibility measures the fluid's compatibility with elastomer materials, indicating its potential for causing swelling or degradation.

In some embodiments, hydrolytic stability measures the fluid's stability in the presence of water, indicating its resistance to hydrolysis.

In some embodiments, scuffing and pitting wear validation tests measure the fluid's ability to protect against scuffing and pitting wear, indicating its protective properties. The values are specified as no scuffing and minimum values of 90 hours for pitting wear validation with regard to all example formulations.

In some embodiments, the coefficient of friction measures the fluid's ability to reduce friction, indicating its lubricating performance. In certain embodiments, the value is less than 0.012 for all example formulations and less than 0.01 for most of the formulations.

### Drive Unit, Vehicle and Use

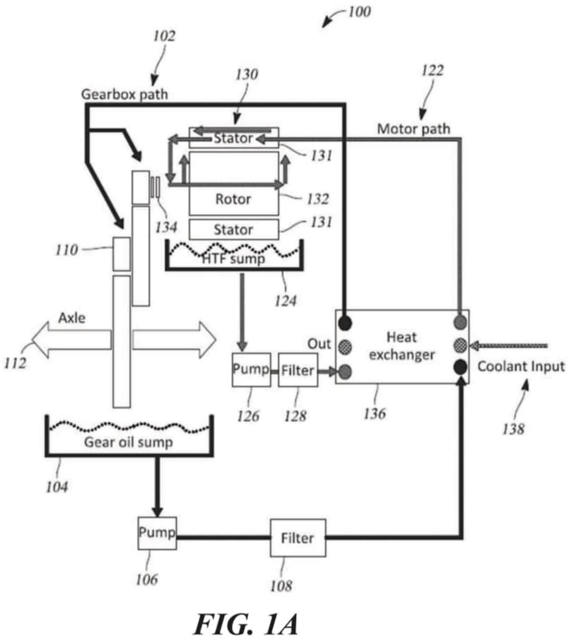

FIG. 1A shows a schematic depiction of dual fluid path system 100, according to some embodiments, comprising a gearbox fluid path 102 and a motor fluid path 122. The gearbox fluid path 102 includes a gear sump 104 comprising a gear fluid in fluid communication with a gearbox pump 106, which passes (e.g. pumps) the gear fluid through a gearbox filter 108 to a heat exchanger 136. The gear fluid from the heat exchanger 136 is then passed to the gear system 110, which returns the gear fluid to the gear sump 104. The gear system 110 is mechanically connected to the axle 112 of a vehicle. The motor fluid path 122 includes a motor sump 124 comprising a motor fluid in fluid communication with a motor pump 126, which passes the motor fluid through a motor filter 128 to the heat exchanger 136. The motor fluid from the heat exchanger 136 is then passed to the motor system 130 comprising stators 131 and a rotor 132, which returns the motor fluid to the motor sump 124. The motor system 130 is mechanically connected to the gear system 110 through connection 134. The heat exchanger 136 comprises a coolant fluid path 138 that flows through the heat exchanger 136 and is configured to exchange heat with the gear fluid and motor fluid.

In some embodiments, at least one of the gear fluid and motor fluid comprises the fluid formulation (i.e., low traction fluid and/or high pressure viscosity fluid). In some embodiments, the gear fluid comprises a first fluid formulation (i.e., low traction fluid or high pressure viscosity fluid), and the motor fluid comprises a second fluid formulation (i.e., low traction fluid or high pressure viscosity fluid). In some embodiments, the gear fluid and motor fluid are different fluid formulations. In some embodiments, the gear fluid and the motor fluid are different low traction fluid formulations. In some embodiments, the gear fluid and the motor fluid are different high pressure viscosity fluid formulations. In some embodiments, one of the gear fluid and the motor fluid is a low traction fluid formulation and the other is a high pressure viscosity fluid formulation. Although a dual oil system is not necessary for enabling low traction fluid or high pressure viscosity fluid design, in some embodiments the dual oil system may provide additional benefits to fluid systems utilizing low traction fluids and/or high pressure viscosity fluids.

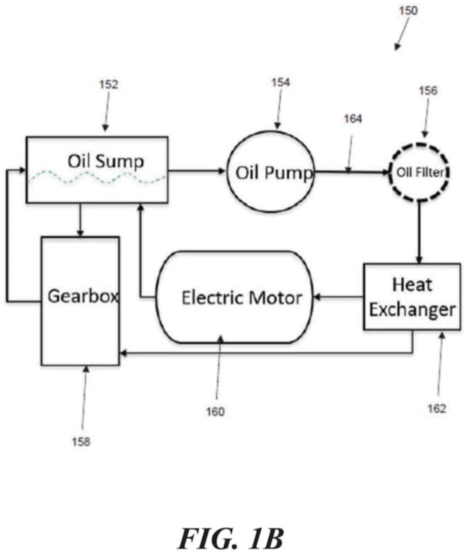

FIG. 1B shows a schematic depiction of a single fluid path system or single fluid system 150 according to some embodiments, comprising a single fluid path 164. The single fluid path 164 includes an oil sump 152 comprising a fluid in fluid communication with an oil pump 154, which passes the fluid through an oil filter 156 to a heat exchanger 162. The fluid from the heat exchanger 162 is then passed to the gearbox 158, which returns the fluid to the oil sump 152. In the single fluid path 164, the fluid from the heat exchanger 162 is also passed to the motor 160, which returns the fluid to the oil sump 152. The gearbox 158 is mechanically connected to the axle of a vehicle. The motor 160 is mechanically connected to the gearbox 158 through a connection. The heat exchanger 162 may comprise a coolant fluid path that flows through the heat exchanger 162 and is configured to exchange heat with the fluid.

In some embodiments, the gear fluid and/or the motor fluid are a fluid formulation. In some embodiments, the motor fluid is a low viscosity oil for cooling and/or lubrication, which is different from the fluid formulation. In some embodiments, the gear fluid and the motor fluid are the same fluid. In some embodiments, the gear fluid and the motor fluid are low traction fluids. In some embodiments, the gear fluid and the motor fluid are the same low traction fluid formulation or different low traction fluid formulations. In some embodiments, the gear fluid and the motor fluid are high pressure viscosity coefficient fluids. In some embodiments, the gear fluid and the motor fluid are the same high pressure viscosity coefficient fluid formulation or different high pressure viscosity coefficient fluid formulations. In some embodiments, the gear fluid and the motor fluid are different fluids. In some embodiments, the gear fluid is a low traction fluid and the motor fluid is a different fluid. In some embodiments, the gear fluid is a low traction fluid and the motor fluid is a different low traction fluid, a high pressure viscosity fluid, or a low viscosity oil. In some embodiments, the gear fluid is a high pressure viscosity coefficient fluid and the motor fluid is a different fluid. In some embodiments, the gear fluid is a high pressure viscosity coefficient fluid and the motor fluid is a different high pressure viscosity fluid, a low traction fluid, or a low viscosity oil. In some embodiments, the fluid in the single fluid path system is a low traction fluid or a high pressure viscosity coefficient fluid.

In some embodiments, the gearbox fluid system and/or the single fluid system is configured to pump fluid at a rate of, of about, of at least, or of at least about, 0.01 liters per minute (LPM), 0.03 LPM, 0.05 LPM, 0.1 LPM, 0.15 LPM, 0.2 LPM, 0.3 LPM, 0.5 LPM, 1 LPM, 2 LPM, 3 LPM, 4 LPM, 5 LPM, 6 LPM, 7 LPM, 8 LPM, 9 LPM, 10 LPM, 12 LPM, 15 LPM, 18 LPM, 20 LPM, 22 LPM, 25 LPM, 27 LPM, 29 LPM or 30 LPM or any range of values therebetween.

In some embodiments, the vehicle comprises the fluid path system (e.g., single or dual fluid path system). In some embodiments, the vehicle comprises an electric motor. In some embodiments, the vehicle is an electric vehicle. In some embodiments, the vehicle comprises a first drive unit and a secondary drive unit.

### Performance and Results

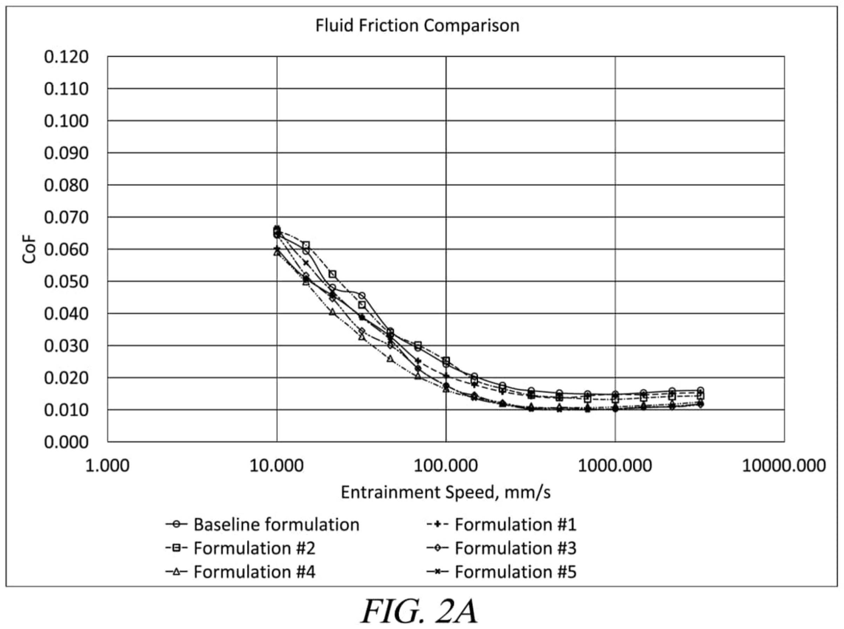

Example performance and results obtained (e.g., through measurements or simulations) based on fluid formulations discussed above are described in FIGS. 2A - 6D. The example performance and results were obtained through experimentation and/or simulations based on applications of the finished lubricant formulations #1 - #6 of Table D and/or other fluid formulations formulated based on example base oils of Table A and Table C.

FIG. 2A shows a fluid friction comparison between fluid formulations (e.g., finished lubricant formulations #1 - #6 of Table D) and a baseline fluid formulation. The horizontal axis represents the entrainment speed, measured in millimeters per second (mm/s), on a logarithmic scale ranging from 1 mm/s to 10,000 mm/s. The vertical axis represents the coefficient of friction, ranging from 0.000 to 0.120. As shown in FIG. 2A, fluid formulations #1 - #5 and the baseline fluid formulation show a decrease in the coefficient of friction as the entrainment speed increases. At lower entrainment speeds (around 10 mm/s), the coefficient of friction is higher for all formulations, indicating higher frictional losses. As the entrainment speed increases to around 100 mm/s, the coefficient of friction decreases significantly for all formulations, reaching a plateau at higher speeds.

FIG. 2A shows that finished lubricant formulations #1 - #6 of Table D generally show lower coefficients of friction compared to the baseline fluid formulation, indicating superior friction-reducing properties of the finished lubricant formulations #1 - #6,

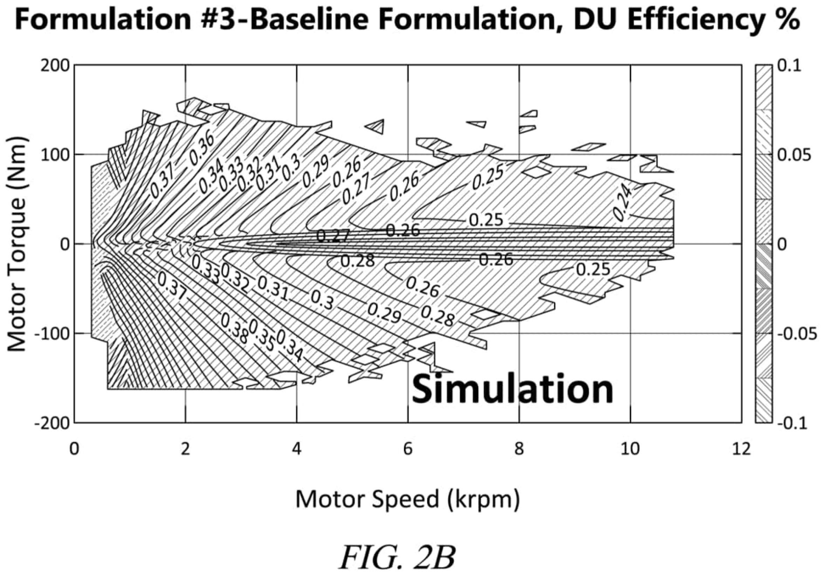

FIG. 2B illustrates drive unit (DU) efficiency based on a fluid formulation (e.g., finished lubricant formulations #3 of Table D). More specifically, FIG. 2B illustrates the drive unit (DU) efficiency percentage for the finished lubricant formulation #3 of Table D under various motor operating conditions based on simulation results. The horizontal axis represents the motor speed, measured in thousands of revolutions per minute (krpm), ranging from 0 to 12 krpm. The vertical axis represents the motor torque, measured in Newton-meters (Nm), ranging from -200 Nm to 200 Nm. The gradient axis, represented by the color gradient, indicates the drive unit efficiency percentage.

As shown in FIG. 2B, the color gradient ranges from red to green, with red indicating lower efficiency and green indicating higher efficiency. The efficiency values are annotated on the surface plot, ranging from approximately 0.1% to 1.1%. Although efficiency values vary across various motor torques and/or motor speeds, FIG. 2B nevertheless demonstrates the effectiveness of finished lubricant formulation #3 of Table D in enhancing drive unit efficiency across a wide range of motor operating conditions (e.g., no efficiency values between -0.1% to 0%). As such, the simulation results of FIG. 2B indicate that the finished lubricant formulation #3 provides significant efficiency gains, particularly in the midrange of motor speeds and torques.

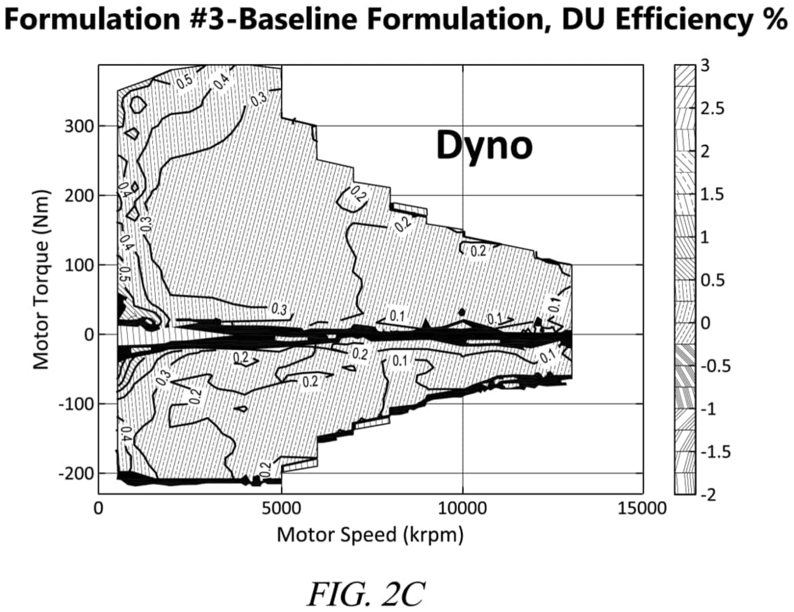

FIG. 2C illustrates the drive unit (DU) efficiency percentage for a fluid formulation (e.g., finished lubricant formulations #3 of Table D) under various motor operating conditions based on dynamometer (dyno) testing data. The horizontal axis represents the motor speed, measured in revolutions per minute (rpm), ranging from 0 to 15,000 rpm. The vertical axis represents the motor torque, measured in Newton-meters (Nm), ranging from -200 Nm to 300 Nm. The color gradient on the plot represents the drive unit efficiency percentage, with the scale ranging roughly from -0.5% to 0.5%. Overall, FIG. 2C demonstrates the effectiveness of finished lubricant formulations #3 of Table D in enhancing drive unit efficiency across a wide range of motor operating conditions based on dyno testing data.

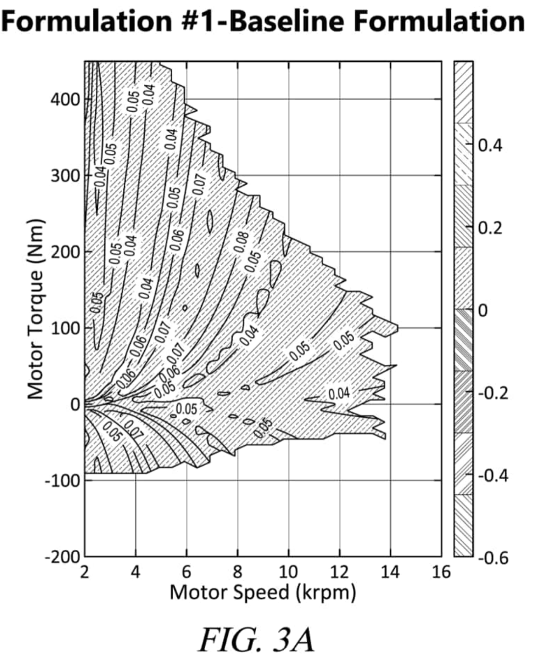

FIG. 3A is a graph illustrating the drive unit (DU) efficiency percentage for a fluid formulation (e.g., the finished lubricant formulation #1) under various motor operating conditions. FIG. 3A provides a visual representation of how the efficiency of the drive unit varies with changes in motor speed and motor torque. The horizontal axis represents the motor speed, measured in thousands of revolutions per minute (krpm), ranging from 0 to 16 krpm. The vertical axis represents the motor torque, measured in Newton-meters (Nm), ranging from -200 Nm to 400 Nm. The color gradient represents the drive unit efficiency percentage, with the scale ranging from -0.6% to 0.4%.

As shown in FIG. 3A, the color gradient ranges from red to green, with red indicating lower efficiency and green indicating higher efficiency. The efficiency values are annotated on the contour lines, providing specific efficiency percentages at various motor speed and torque combinations. Overall, FIG. 3A indicates that the formulation provides significant efficiency gains (e.g., without efficiency percentage between -0.6% to 0%), demonstrating the effectiveness of the fluid formulation in enhancing drive unit efficiency across a wide range of motor operating conditions.

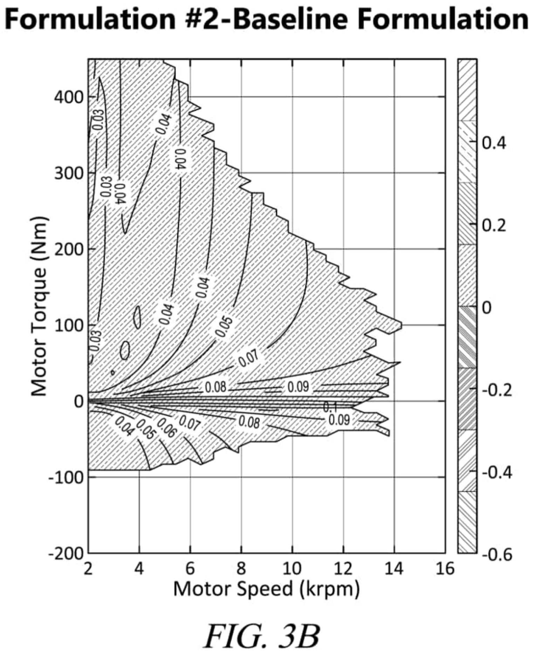

FIG. 3B is a graph illustrating the drive unit (DU) efficiency percentage for a fluid formulation (e.g., the finished lubricant formulation #2) under various motor operating conditions. Similar to FIG. 3A, FIG. 3B indicates that the formulation provides significant efficiency gains (e.g., without efficiency percentage between -0.6% to 0%), demonstrating the effectiveness of the fluid formulation in enhancing drive unit efficiency across a wide range of motor operating conditions.

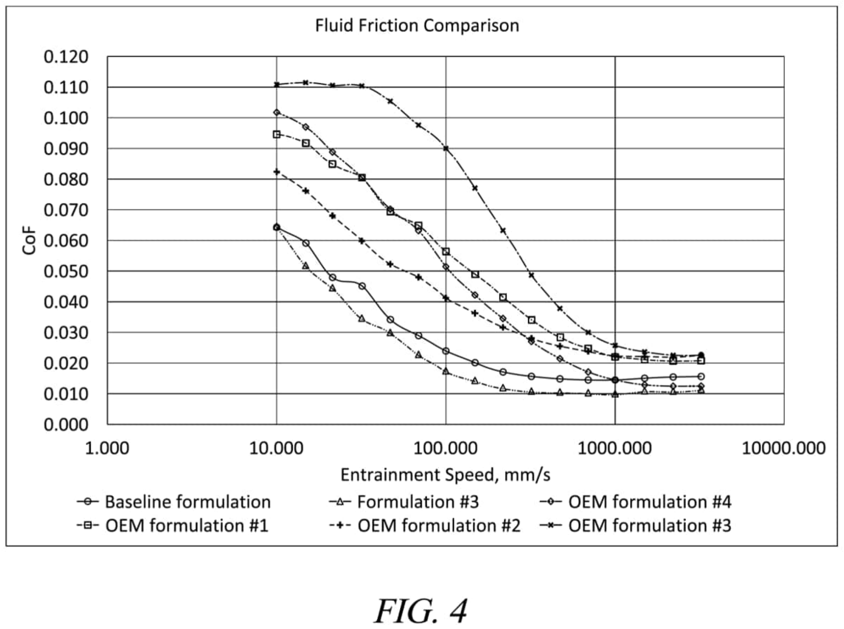

FIG. 4 shows fluid friction (e.g., coefficient of friction (CoF)) comparison between various fluid formulations at different entrainment speeds. In FIG. 4, the horizontal axis represents the entrainment speed, measured in millimeters per second (mm/s), on a logarithmic scale ranging from 1 mm/s to 10,000 mm/s. The vertical axis represents the coefficient of friction, ranging from 0.000 to 0.120. More specifically, FIG. 4 compares the coefficient of friction between a baseline formulation, a fluid formulation (e.g., the finished lubricant formulation #3 of Table D), and four original equipment manufacturer (OEM) fluid formulations.

As shown in FIG. 4, all fluid formulations show a decrease in the coefficient of friction as the entrainment speed increases. At lower entrainment speeds (e.g., around 10 mm/s), the coefficient of friction is higher for all formulations, indicating higher frictional losses. As the entrainment speed increases to around 100 mm/s, the coefficient of friction decreases for all formulations and reaches a low plateau at higher speeds (e.g., above 1,000 mm/s). The fluid formulation shows the lowest coefficient of friction across the range of entrainment speeds, indicating superior friction-reducing properties compared to the four OEM fluid formulations and the baseline formulation.

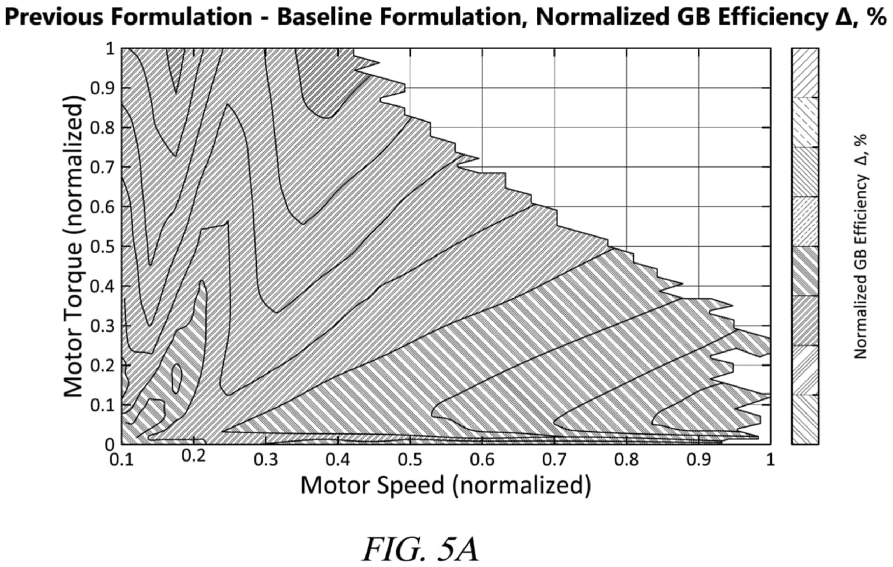

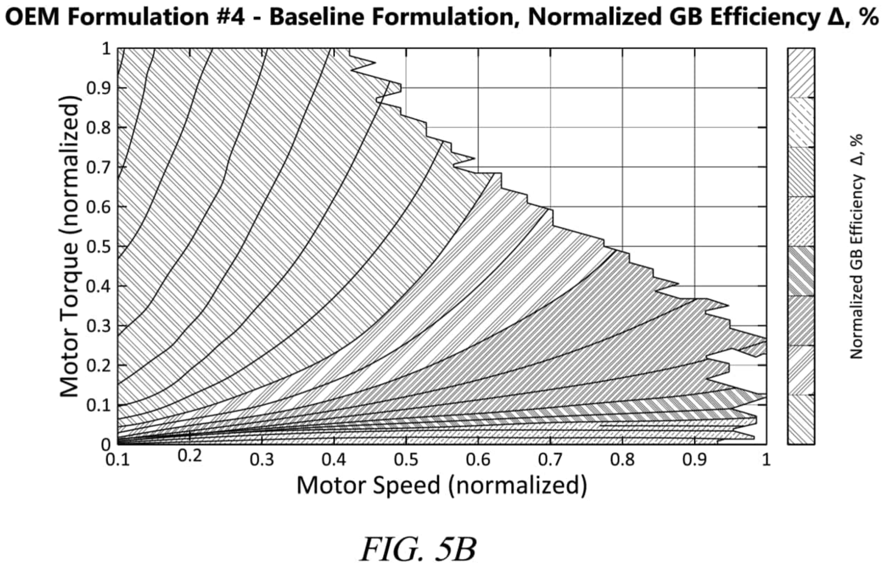

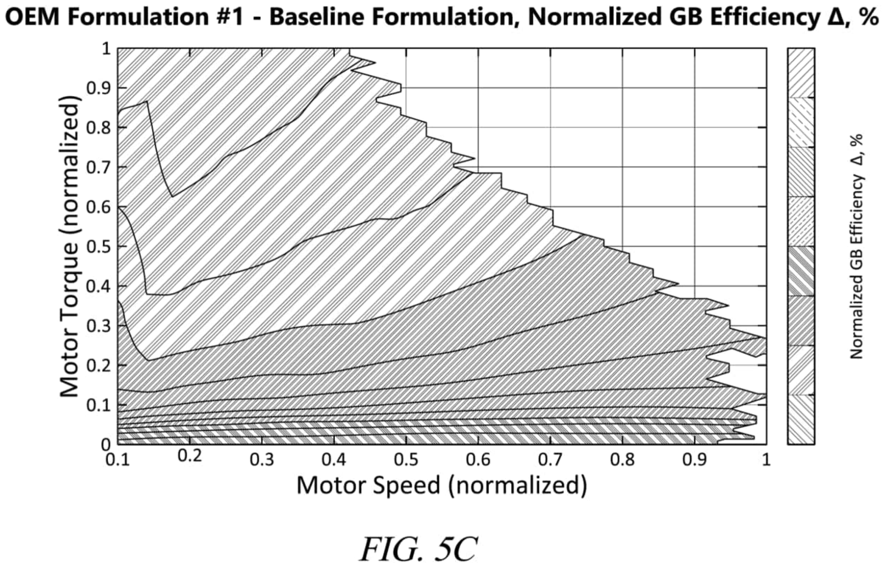

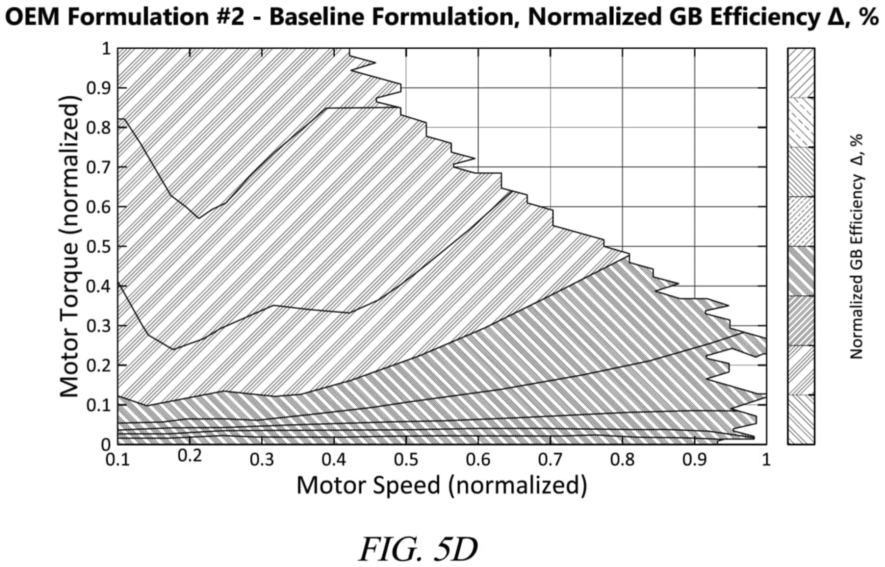

FIGS. 5A, 5B, 5C, and 5D illustrate differences in normalized gearbox efficiency between various fluid formulations according to some embodiments of the present disclosure. In FIGS. 5A, 5B, 5C, and 5D, the horizontal axis represents normalized motor speed, ranging from 0.1 to 1.0. The vertical axis represents the normalized motor torque, ranging from 0.1 to 1.0. The color gradient represents the normalized efficiency difference in percentage (Δ, %), with the scale ranging from negative values (red) to positive values (green). More specifically, FIG. 5A shows a difference in normalized gearbox (GB) efficiency between a baseline formulation and a fluid formulation (e.g., one of the finished lubricant formulations of Table D). FIG. 5B shows a difference in normalized gearbox (GB) efficiency between a fourth OEM fluid formulation and the fluid formulation. FIG. 5C shows a difference in normalized gearbox (GB) efficiency between a first OEM fluid formulation and the fluid formulation, FIG. 5D shows a difference in normalized gearbox (GB) efficiency between a second OEM fluid formulation and the fluid formulation.

Overall, FIGS. 5A, 5B, 5C, and 5D show that the fluid formulation has higher normalized gearbox efficiency than those of the baseline fluid formulation and the OEM fluid formulations, indicating an efficiency gain associated with the fluid formulation. FIGS. 5A, 5B, 5C, and 5D also suggest that the baseline fluid formulation has higher normalized gearbox efficiency than those of the OEM fluid formulations.

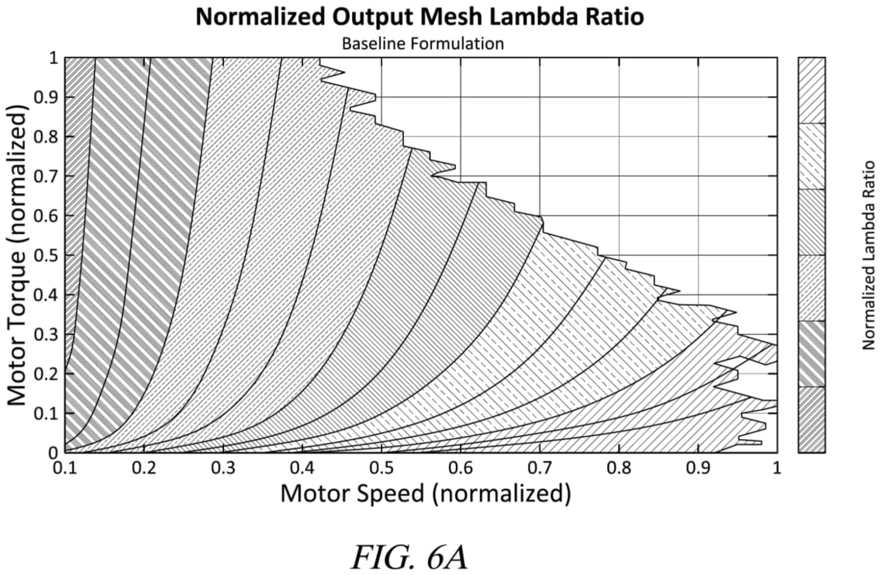

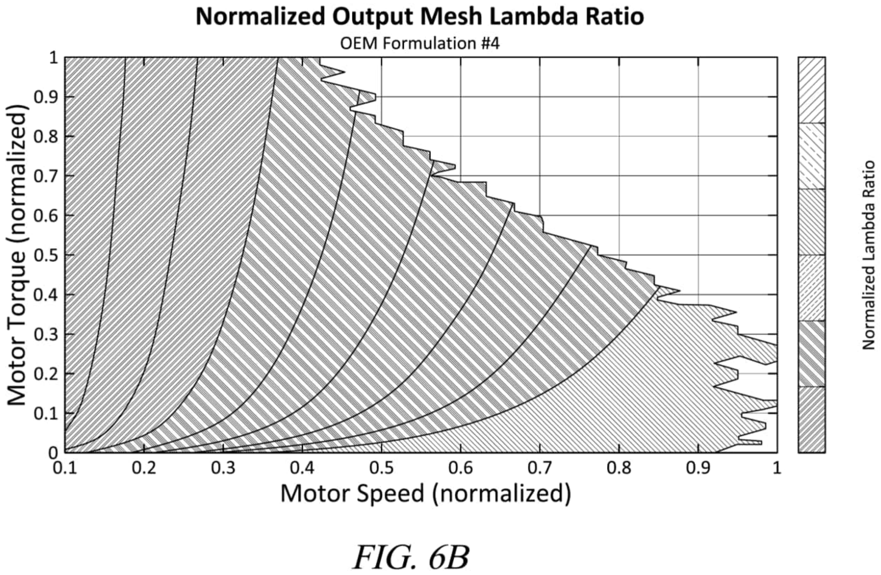

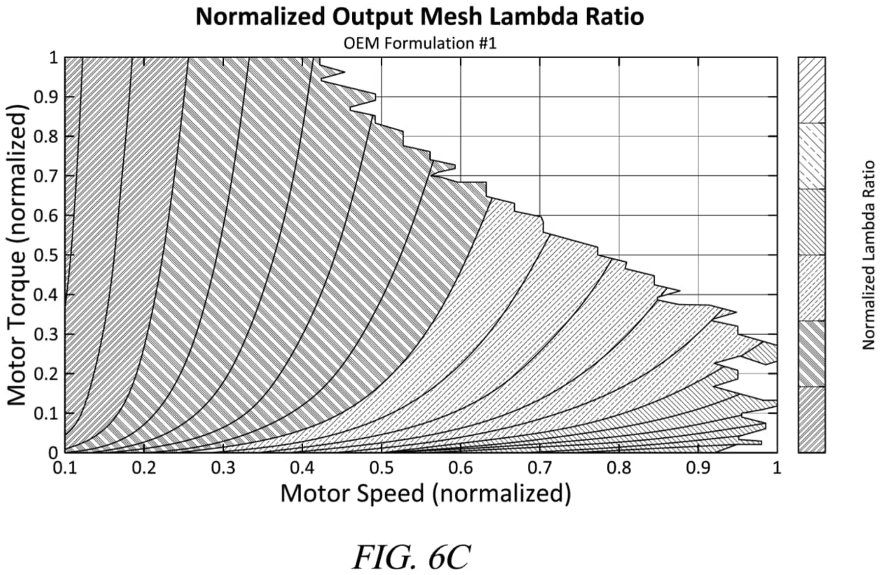

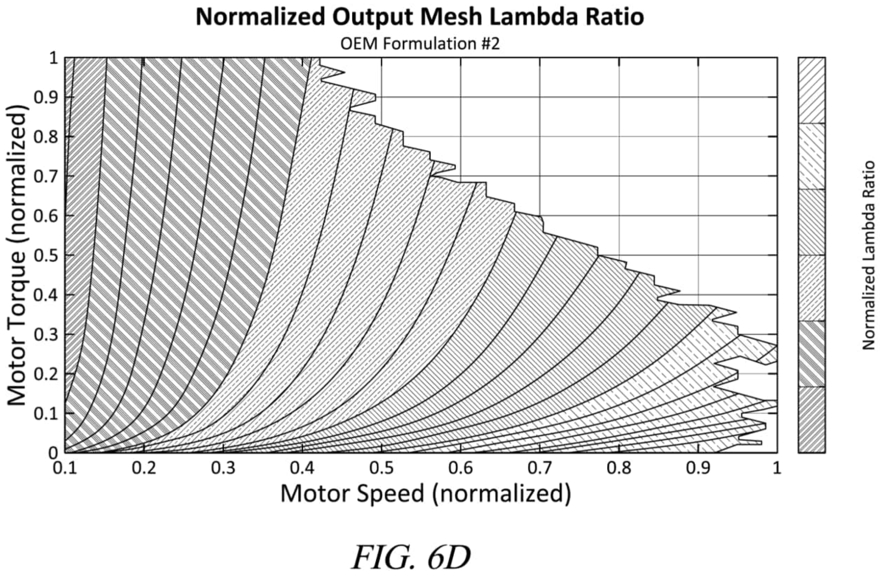

FIGS. 6A, 6B, 6C, and 6D illustrate normalized output mesh lambda ratio for various fluid formulations under various motor operating conditions according to some embodiments of the present disclosure. The lambda ratio is a measure of the lubrication film thickness relative to the surface roughness, with higher values indicating better lubrication and protection. The horizontal axis represents normalized motor speed, ranging from 0.1 to 1.0. The vertical axis represents normalized motor torque, ranging from 0.1 to 1.0. The color gradient represents the normalized lambda ratio, with the scale ranging from red (lower lambda ratio) to green (higher lambda ratio).

FIG. 6A shows the normalized output mesh lambda ratio for fluid formulation (e.g., one of the finished lubricant formulations of Table D). FIG. 6A is predominantly shaded in green, indicating that the fluid formulation generally provides a higher lambda ratio across a wide range of motor operating conditions, suggesting superior lubrication and protection performance. The green area may also suggest the fluid formulation maintains a thicker lubrication film, reducing surface contact and wear.

FIGS. 6B - 6D illustrate the normalized output mesh lambda ratio for various OEM fluid formulations. Compared with FIG. 6A, FIGS. 6B - 6D are more shaded in red, indicating that the OEM fluid formulations generally provide a lower lambda ratio compared with the fluid formulation. As such, the OEM fluid formulations may maintain a thinner lubrication film, increasing surface contact and wear. Overall, FIGS. 6A, 6B, 6C, and 6D demonstrate that the fluid formulation generally provides a higher normalized output mesh lambda ratio compared to various OEM fluid formulations across a wide range of motor operating conditions, indicating that the fluid formulation offers better lubrication and protection.

### Conclusion

While certain embodiments have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately," "about," "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

The headings provided herein, if any, are for convenience only and do not necessarily affect the scope or meaning of the devices and methods disclosed herein.

## Claims

1. A fluid formulation, comprising:
an additive; and
a base oil, wherein the base oil is selected from the group consisting of an American Petroleum Institute (API) group II oil, an API group II+ oil, an API group III oil, an API group III+ oil, an API group IV oil, an API group V oil, and combinations thereof,
wherein the base oil comprises a primary base oil and a secondary base oil that has a lower weight percentage than the primary base oil.

2. The fluid formulation of Claim 1, wherein the base oil is selected from the group consisting of a paraffin, a poly-alpha-olefin (PAO), a monoester, a di-ester, an alkylated naphthalene, a polyol ester, and combinations thereof.

3. The fluid formulation of Claim 2, wherein the paraffin is selected from the group consisting of an iso-paraffin, a straight chain paraffin, a cyclo paraffin, and combinations thereof.

4. The fluid formulation of Claim 2 or 3, wherein the poly-alpha-olefin is selected from the group consisting of dimer, trimer, and tetramer formed from C6, C8, C10, C12, C14, or C16 monomers through oligomerization assisted by Ziegler-Natta catalysts, Lewis acids, or combinations thereof, wherein the group does not include C10 trimer, or wherein the poly-alpha-olefin is selected from the group consisting of oligomerizations formed from C6, C8, C10, C12, C14, or C16 monomers using metallocene compound based catalysts, Ziegler-Natta catalysts, Lewis acids, or combinations thereof, and wherein a carbon number of one molecule of the oligomerizations is higher than 80 and less than 300.

5. The fluid formulation of Claim 2, 3, or 4, wherein the monoester is composed of monobasic acids and alcohols in 1:1 ratio, and wherein the monobasic acids is selected from the group consisting of octanoic acid, iso-octanoic acid, nonanoic acid, iso-nonanoic acid, decanoic acid, iso- decanoic acid, dodecanoic acid, iso-dodecanoic acid, myristic acid, iso-myristic acid, palmitic acid, iso-palmitic acid, stearic acid, iso-stearic acid, oleic acid, and corresponding isomers, and wherein the alcohols is selected from the group consisting of iso-octyl alcohol, 2-ethylhexyl alcohol, iso-nonyl alcohol, 2-propylheptyl alcohol, iso-decyl alcohol, iso-tridecyl alcohol, and corresponding isomers, and/or wherein the di-ester is composed of diacids and alcohols in 1:2 ratio, and wherein diacids is selected from the group consisting of adipic acid, azelaic acid, sebacic acid, dodecanedioc acid, and corresponding isomers, and wherein alcohols is selected from the group consisting of iso-octyl alcohol, 2-ethylhexyl alcohol, iso-nonyl alcohol, 2-propylheptyl alcohol, iso-decyl alcohol, iso-tridecyl alcohol, and corresponding isomers, and/or wherein the polyol ester is composed of polyols and monobasic acids, wherein the polyols is selected from the group consisting of neopentyl glycol and pentaerythritol, and wherein monobasic acids is selected from the group consisting of pentanoic acid, iso-pentanoic acid, hexanoic acid, iso-hexanoic acid, heptanoic acid, iso-heptanoic acid, octanoic acid, iso-octanoic acid, nonanoic acid, iso-nonanoic acid, decanoic acid, iso-decanoic acid, dodecanoic acid, iso-dodecanoic acid, myristic acid, iso-myristic acid, palmitic acid, iso-palmitic acid, stearic acid, iso-stearic acid, oleic acid, and corresponding isomers.

6. The fluid formulation of one of the preceding claims, wherein the additive is selected from the group consisting of an anti-friction additive, an anti-wear additive, an extreme pressure additive, an anti-oxidant, a corrosion inhibitor, a yellow metal deactivator, a dispersant, a detergent, a defoamer, a seal swell agent, a solvency booster, a dye, and combinations thereof.

7. The fluid formulation of one of the preceding claims, wherein the fluid formulation comprises 0 to 15 wt.% of the additive, and wherein the additive is selected from the group consisting of HiTEC 3491K, HiTEC 5769, HiTEC 35750, HiTEC 2571, HiTEC 4780, other equivalent additives, and combinations thereof.

8. The fluid formulation of one of the preceding claims, further comprising a viscosity index improver, preferably wherein the fluid formulation comprises 0-6 wt.% of the viscosity index improver, and/or wherein the viscosity index improver comprises a viscosity of 100-2000 cSt at 100 °C.

9. The fluid formulation of one of the preceding claims, further comprising a high viscosity base oil, preferably wherein the fluid formulation comprises 0-40 wt.% of the high viscosity base oil, and wherein the high viscosity base oil is selected from a group consisting of oligomers of C6, C8, C10, C12, C14, and C16 monomers, and/or complex esters, and/or wherein the high viscosity base oil comprises a viscosity of 40-1200 cSt at 100 °C.

10. The fluid formulation of one of the preceding claims, wherein the fluid formulation comprises Sulfur content by mass between 0 to 2000 ppm, Phosphorous content by mass between 0 to 300 ppm, Calcium content by mass between 0 to 150 ppm, Boron content by mass between 0-100 ppm, Silicon content by mass between 0 to 20 ppm, and Nitrogen content by mass between 0-1200 ppm.

11. The fluid formulation of one of the preceding claims, wherein the secondary base oil has a higher viscosity coefficient compared to the primary base oil.

12. A vehicle drive unit, comprising:
a motor;
a motor fluid system in fluid communication with the motor;
a gearbox; and
a gearbox fluid system in fluid communication with the gearbox, wherein the gearbox fluid system comprises the fluid formulation of one of the preceding claims.

13. The vehicle drive unit of Claim 12, wherein the gearbox fluid system is configured to pump fluid at a rate of 1-20 LPM through a mechanical or an electric oil pump, and/or wherein the motor fluid system is in fluid communication with the gearbox fluid system, and/or wherein the motor fluid system comprises a low viscosity motor fluid, and/or wherein the motor fluid system comprises the fluid formulation.

14. The vehicle drive unit of Claim 12, or 13, wherein the motor is an electric motor.

15. A vehicle comprising the vehicle drive unit of one of claims 12 to 14.
